# EUROPEAN PATENT SPECIFICATION

(11) **EP 3 163 803 B1**
(45) Date of publication and mention of the grant of the patent: **15.08.2018**
(21) Application number: 16163431.6
(22) Date of filing: 31.03.2016
(51) Int. Cl.: H04W 4/12, H04L 29/06, H04W 12/06, H04W 48/16, H04W 84/12, H04W 76/15, H04L 12/28

(54) **METHOD AND DEVICE FOR ESTABLISHING CONNECTION**
VERBINDUNGSAUFBAUVERFAHREN UND -VORRICHTUNG
PROCÉDÉ ET DISPOSITIF POUR ÉTABLIR UNE CONNEXION

(30) Priority: 29.10.2015 CN 201510717725
(43) Date of publication of application: 03.05.2017
(73) Proprietor: Xiaomi Inc., Beijing 100085 (CN)
(72) Inventor: FAN, Jialin, Beijing 100085 (CN); QU, Heng, Beijing 100085 (CN); HUANG, Qiuzhi, Beijing 100085 (CN)
(74) Representative: Sackin, Robert

(56) References cited:
- US-A1- 2006 068 760

## Description

### TECHNICAL FIELD

The present disclosure generally relates to the field of communication, and more particularly, to a method and a device for establishing a connection.

### BACKGROUND

At present, increasingly more smart devices may be connected to a router via a wireless local area network (WLAN), such as WIFI so that users can access the Internet by the smart devices. In related arts, the smart devices obtain connection information of the router by WIFI protected setup (WPS) mode. The connection information may include a Service Set Identifier (SSID) which the router belongs to and a connection password which enables a connection to the router. SSID is an identifier for a WLAN.

However, in the WPS mode, the smart devices obtain the connection information in a wireless manner which is not safe. If the WPS mode is started and other smart devices are in a monitoring state, the connection information of the router may be leaked and information security is poor.

US patent application with publication number US 2006/0068760 discloses a method and apparatus for establishing a wireless connection. It does so between two dual mode devices. The two devices are connected first through a wired connection, by which a link key required to establish a wireless connection is sent from one device to the other. Having received this, the two devices are able to connect wirelessly.

International patent application with publication No. WO03/081373 discloses a method that gives a user rapid notice of Bluetooth devices within communication range and yet it selectively blocks any notice about Bluetooth devices that the user wishes to ignore.

### SUMMARY

In view of the above, the present disclosure provides a method and a device for establishing a connection in order to solve the problem with related arts that the connection information of a router may be leaked and information security is poor. The present invention is carried out as defined by the independent claims below to which reference should now be made. Preferred features are defined by the dependent claims.

According to a first aspect of embodiments of the present disclosure, there is provided a method for establishing a connection, applied in a smart device and including:
establishing a first connection with a router in a wired connection manner;
receiving connection information sent from the router via the first connection, wherein the connection information is configured to enable the smart device to be connected to the router in a wireless connection manner; and
according to the connection information, establishing a second connection with the router in the wireless connection manner.

Optionally, the establishing the first connection with the router in the wired connection manner, includes:
establishing the first connection between a first Universal Serial Bus (USB) interface of the smart device and a second USB interface of the router by a data line.

Optionally, the receiving the connection information sent from the router via the first connection, includes:
obtaining a device identity of the smart device;
sending the device identity to the router via the first connection, so that the router obtains a verification result of whether the smart device is authenticated according to the device identity and sends the connection information via the first connection when the verification result indicates that the smart device is authenticated; and
receiving the connection information sent from the router via the first connection.

Optionally, the connection information includes a target Service Set Identifier (SSID) which the router belongs to and a target connection password which enables a connection to the router.

Optionally, the according to the connection information, establishing the second connection with the router in the wireless connection manner, includes:
performing SSID scanning; and
if the target SSID is found, establishing the second connection with the router in a Wireless Fidelity (WIFI) connection manner according to the target connection password.

According to a second aspect of embodiments of the present disclosure, there is provided a method for establishing a connection, applied in a router and including:
establishing a first connection with a smart device in a wired connection manner; and
sending pre-stored connection information to the smart device via the first connection, wherein the connection information is configured to enable the smart device to be connected to the router in a wireless connection manner, so that the smart device establishes a second connection with the router in the wireless connection manner according to the connection information.

Optionally, the sending pre-stored connection information to the smart device via the first connection, includes:
receiving a device identity of the smart device sent from the smart device via the first connection;
sending the device identity to a verification server, so that the verification server verifies whether the smart device is authenticated according to the device identity;
receiving a verification result returned by the verification server; and
if the verification result indicates that the smart device is authenticated, sending the pre-stored connection information to the smart device via the first connection.

Sending the pre-stored connection information to the smart device via the first connection, includes:
sending a push notification to a terminal, wherein the push notification is configured to confirm whether to send the connection information; and
if receiving a confirmation message for confirming to send the connection information sent from the terminal, sending the pre-stored connection information to the smart device via the first connection.

According to a third aspect of embodiments of the present disclosure, there is provided a device for establishing a connection, applied in a smart device and including:
a first connection establishing module configured to establish a first connection with a router in a wired connection manner;
a first receiving module configured to receive connection information sent from the router via the first connection established by the first connection establishing module, wherein the connection information is configured to enable the smart device to be connected to the router in a wireless connection manner; and
a second connection establishing module configured to, according to the connection information received by the first receiving module, establish a second connection with the router in the wireless connection manner.

Optionally, the first connection establishing module includes:
a first connection establishing submodule configured to establish the first connection between a first Universal Serial Bus (USB) interface of the smart device and a second USB interface of the router by a data line.

Optionally, the first receiving module includes:
an obtaining submodule configured to obtain a device identity of the smart device;
a first sending submodule configured to send the device identity obtained by the obtaining submodule to the router via the first connection established by the first connection establishing module, so that the router obtains a verification result of whether the smart device is authenticated according to the device identity and sends the connection information via the first connection when the verification result indicates that the smart device is authenticated; and
a first receiving submodule configured to receive the connection information sent from the router via the first connection established by the first connection establishing module.

Optionally, the connection information received by the first receiving module includes a target Service Set Identifier (SSID) which the router belongs to and a target connection password which enables a connection to the router.

Optionally, the second connection establishing module includes:
a scanning submodule configured to perform SSID scanning; and
a second connection establishing submodule configured to, if the target SSID received by the first receiving module is found, establish the second connection with the router in a Wireless Fidelity (WIFI) connection manner according to the target connection password received by the first receiving module.

According to a fourth aspect of embodiments of the present disclosure, there is provided a device for establishing a connection, applied in a router and including:
a third connection establishing module configured to establish a first connection with a smart device in a wired connection manner; and
a sending module configured to send pre-stored connection information to the smart device via the first connection established by the third connection establishing module, wherein the connection information is configured to enable the smart device to be connected to the router in a wireless connection manner, so that the smart device establishes a second connection with the router in the wireless connection manner according to the connection information.

Optionally, the sending module includes:
a second receiving submodule configured to receive a device identity of the smart device sent from the smart device via the first connection established by the third connection establishing module;
a second sending submodule configured to send the device identity received by the second receiving submodule to a verification server, so that the verification server verifies whether the smart device is authenticated according to the device identity;
a third receiving submodule configured to receive a verification result returned by the verification server; and
a third sending submodule configured to, if the verification result received by the third receiving submodule indicates that the smart device is authenticated, send the pre-stored connection information to the smart device via the first connection established by the third connection establishing module.

The sending module includes:
a fourth sending submodule configured to send a push notification to a terminal, wherein the push notification is configured to confirm whether to send the connection information; and
a fourth receiving submodule configured to, if a confirmation message for confirming to send the connection information sent from the terminal is received, send the pre-stored connection information to the smart device via the first connection.

According to a fifth aspect of embodiments of the present disclosure, there is provided a device for establishing a connection, applied in a smart device and including:
a processor; and
a memory for storing instructions executable by the processor;
wherein the processor is configured to:
establish a first connection with a router in a wired connection manner;
receive connection information sent from the router via the first connection, wherein the connection information is configured to enable the smart device to be connected to the router in a wireless connection manner; and
according to the connection information, establish a second connection with the router in the wireless connection manner.

According to a sixth aspect of embodiments of the present disclosure, there is provided a device for establishing a connection, applied in a router and including:
a processor; and
a memory for storing instructions executable by the processor;
wherein the processor is configured to:
establish a first connection with a smart device in a wired connection manner; and
send pre-stored connection information to the smart device via the first connection, wherein the connection information is configured to enable the smart device to be connected to the router in a wireless connection manner, so that the smart device establishes a second connection with the router in the wireless connection manner according to the connection information.

According to a seventh aspect of embodiments of the present disclosure, there is provided a system for establishing a connection, including:
a smart device which includes the device for establishing a connection according to any one of the above third aspect; and
a router which includes the device for establishing a connection according to any one of the above fourth aspect.

According to an eighth aspect of embodiments of the present disclosure, there is provided a system for establishing a connection, including:
a smart device which includes the device for establishing a connection according to the above fifth aspect; and
a router which includes the device for establishing a connection according to the above sixth aspect.

According to a ninth aspect of embodiments of the present disclosure, there is provided a computer program, which when executing on a processor, performs any of the above methods.

The technical solutions provided by embodiments of the present disclosure may have the following advantageous effects:
In embodiments of the present disclosure, a smart device firstly establishes a first connection with a router in a wired connection manner, and then obtains connection information via the first connection, wherein the connection information is configured to enable the smart device to be connected to the router in a wireless connection manner. Further, the smart device, according to the connection information, establishes a second connection with the router in the wireless connection manner. Because the smart device obtains the connection information of the router in the wired connection manner, leakage of the connection information can be avoided and thereby information security is improved.

In embodiments of the present disclosure, after establishing the first connection with the router in the wired connection manner, the smart device may send the device identity of itself to the router via the first connection, and the router obtains a verification result of whether the smart device is authenticated. The router sends pre-stored connection information to the smart device only if the verification result indicates that the smart device is authenticated, and thus the information security is further guaranteed.

In embodiments of the present disclosure, before sending the connection information to the smart device, the router may further send a push notification to a terminal to make a user of the terminal decide whether to send the connection information, and thus user experience is improved.

It is to be understood that both the foregoing general description and the following detailed description are exemplary and explanatory only and are not restrictive of the present disclosure, as claimed.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flowchart showing a method for establishing a connection according to an exemplary embodiment of the present disclosure.
Fig. 2 is a flowchart showing another method for establishing a connection according to an exemplary embodiment of the present disclosure.
Fig. 3 is a flowchart showing another method for establishing a connection according to an exemplary embodiment of the present disclosure.
Fig. 4 is a flowchart showing another method for establishing a connection according to an exemplary embodiment of the present disclosure.
Fig. 5 is a flowchart showing another method for establishing a connection according to an exemplary embodiment of the present disclosure.
Fig. 6 is a flowchart showing another method for establishing a connection according to an exemplary embodiment of the present disclosure.
Figs. 7A and 7B are flowcharts showing further methods for establishing a connection according to an exemplary embodiment of the present disclosure.
Fig. 8 is a block diagram showing a device for establishing a connection according to an exemplary embodiment of the present disclosure.
Fig. 9 is a block diagram showing another device for establishing a connection according to an exemplary embodiment of the present disclosure.
Fig. 10 is a block diagram showing another device for establishing a connection according to an exemplary embodiment of the present disclosure.
Fig. 11 is a block diagram showing another device for establishing a connection according to an exemplary embodiment of the present disclosure.
Fig. 12 is a block diagram showing another device for establishing a connection according to an exemplary embodiment of the present disclosure.
Fig. 13 is a block diagram showing another device for establishing a connection according to an exemplary embodiment of the present disclosure.
Fig. 14 is a block diagram showing another device for establishing a connection according to an exemplary embodiment of the present disclosure.
Fig. 15 is a block diagram showing a structure of a device for establishing a connection according to an exemplary embodiment of the present disclosure.
Fig. 16 is a block diagram showing another structure of a device for establishing a connection according to an exemplary embodiment of the present disclosure.
Fig. 17 is a block diagram showing a structure of a system for establishing a connection according to an exemplary embodiment of the present disclosure.
Fig. 18 is a block diagram showing another structure of a system for establishing a connection according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

The terminology used in the description of the disclosure herein is for the purpose of describing particular examples only and is not intended to be limiting of the disclosure. As used in the description of the disclosure and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items.

It shall be appreciated that although the present disclosure uses terminologies "first", "second", and "third" and the like to describe various information, the information shall not be limited by these terminologies. Using these terminologies is only for distinguishing information of the same type. For example, without departing from the scope of the present disclosure, the first information may be referred to as the second information, and similarly, the second information may be referred to as the first information. Depending on the context, the terminology "if' used herein may be interpreted as "when" or "in response to determining that...".

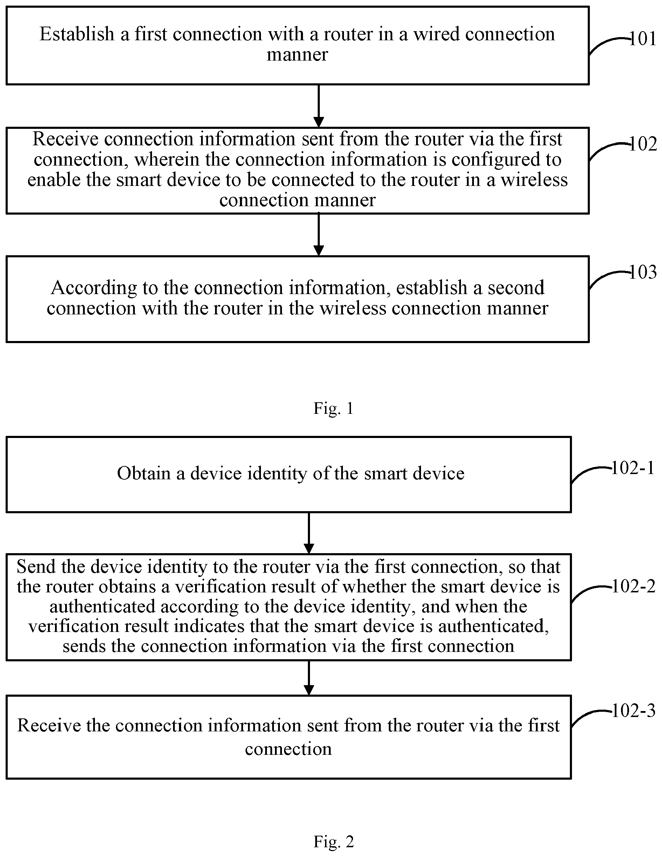

Fig. 1 shows a method for establishing a connection according to an exemplary embodiment. The method is applied in a smart device and includes the following steps:
In step 101, a first connection is established with a router in a wired connection manner.

The smart device involved in embodiments of the present disclosure may be various smart devices provided with a Universal Serial Bus (USB) interface, such as a smart phone, a tablet computer, a Personal Digital Assistant (PDA) and the like.

Step 101 may include the following steps:

In step 101-1, the first connection is established between a first Universal Serial Bus (USB) interface of the smart device and a second USB interface of the router by a data line.

In embodiments of the present disclosure, the router is provided with a USB interface as well. A user may connect the smart device and the USB interface of the router in a wired connection manner by a data line. After the smart device detects using related technologies that a first connection is established between a first USB interface of the smart device itself and a second USB interface of the router by the data line, the smart device proceeds to perform the later step 102.

In step 102, connection information sent from the router is received via the first connection. The connection information is configured to enable the smart device to be connected to the router in a wireless connection manner.

In the embodiments of the present disclosure, the router may be configured as follows: the router automatically sends the connection information to the smart device via the first connection once the router detects using related arts that the first connection is established between the second USB interface of the router itself and the first USB interface of the smart device, wherein the connection is configured to enable the smart device to be connected to the router in a wireless connection manner.

Rather, in order to avoid that the connection information is obtained by an unauthenticated device so as to further guarantee the information security, optionally, step 102 may be implemented as shown in Fig. 2. Fig. 2 shows another method for establishing a connection according to an exemplary embodiment. The method may include the following steps:
In step 102-1, a device identity of the smart device is obtained.

In this step, optionally, the smart device may output a preset virtual button. If a user selects the virtual button, the smart device determines that the smart device currently needs to obtain the connection information which enables a connection to the router in a wireless connection manner. At this time, the smart device may automatically obtain the device identity of itself. The device identity may be a Serial Number (SN), a Media Access Control (MAC) address or International Mobile Equipment Identity (IMEI).

In step 102-2, the device identity is sent to the router via the first connection, so that the router obtains a verification result of whether the smart device is authenticated according to the device identity and sends the connection information via the first connection when the verification result indicates that the smart device is authenticated.

In this step, the smart device sends the device identity to the router via the previously established first connection. After receiving the device identity, the router forwards the device identity to a verification server, so that the verification server verifies whether the smart device is authenticated according to the device identity, and sends the verification result to the router.

In step 102-3, the connection information sent from the router via the first connection is received.

If the verification result indicates that the smart device is authenticated, the router may send the connection information to the smart device via the first connection as well.

Optionally, connection information includes a target Service Set Identifier (SSID) which the router belongs to and a target connection password which enables a connection to the router.

In step 103, according to the connection information, a second connection is established with the router in the wireless connection manner.

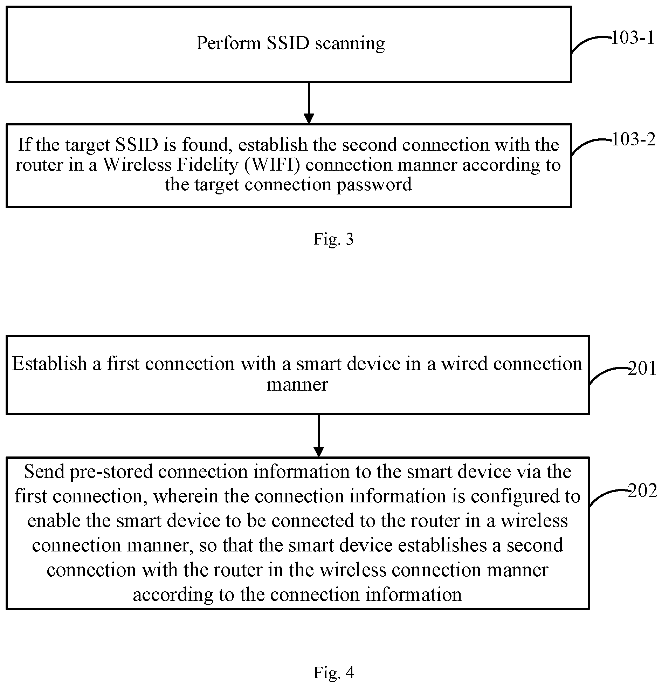

Optionally, step 103 is as shown in Fig. 3. Fig. 3 shows another method for establishing a connection according to an exemplary embodiment. The method may include the following steps.

In step 103-1, SSID scanning is performed.

In the step, the smart device may scan SSIDs using related arts within a range where the smart device currently is.

In step 103-2, if the target SSID is found, the second connection is established with the router in a wireless local area network or Wireless Fidelity (WIFI) connection manner according to the target connection password.

If the smart device finds the target SSID in the connection information, the smart device automatically establishes a second connection with the router via a Wireless Fidelity (WIFI) connection manner according to related arts based on the target connection password in the connection information.

In the above embodiment, before the smart device needs to establish the second connection with the router in a wireless connection manner, the smart device firstly establishes a first connection with the router in a wired connection manner, and then obtains connection information via the first connection, wherein the connection information is configured to enable the smart device to be connected to the router in a wireless connection manner. Because the smart device obtains the connection information in the wired connection manner, leakage of the connection information of the router can be avoided and thereby information security is improved.

Fig. 4 shows another method for establishing a connection according to an exemplary embodiment. The method is applied in a router and includes the following steps:
In step 201, a first connection is established with a smart device in a wired connection manner.

The router involved in embodiments of the present disclosure may be various smart routers provided with a USB interface.

A user may connect a smart device and the USB interface of the router in a wired connection manner by a data line. After the router detects using related arts that a first connection is established between the second USB interface of the router itself and the first USB interface of the smart device by a data line, the router proceeds to perform later step 202.

In step 202, pre-stored connection information is sent to the smart device via the first connection, wherein the connection information is configured to enable the smart device to be connected to the router in a wireless connection manner, so that the smart device establishes a second connection with the router in the wireless connection manner according to the connection information.

Optionally, the router may be configured as follows in advance: the router automatically sends the connection information to the smart device via the first connection once the router detects that the first connection is established. According to the received connection information, the smart device may establish a second connection with the router by the approaches as mentioned in the above embodiments.

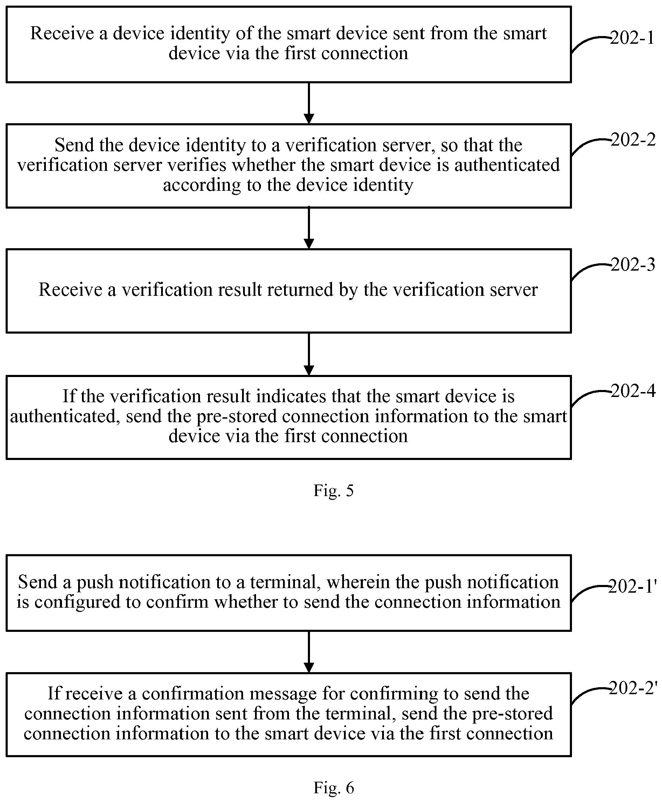

Rather, in order to avoid that the connection information is obtained by an unauthenticated device so as to further guarantee the information security, optionally, step 202 may be implemented as shown in Fig. 5. Fig. 5 shows another method for establishing a connection according to an exemplary embodiment. The method may include the following steps:

In step 202-1, a device identity of the smart device sent from the smart device via the first connection is received.

In the step, the router receives the device identity of the smart device via the first connection according to related arts. Optionally, the device identity is the SN, MAC address or IMEI of the smart device.

In step 202-2, the device identity is sent to a verification server, so that the verification server verifies whether the smart device is authenticated according to the device identity.

The router may forward the device identity to the verification server according to related arts so that the verification server verifies whether the smart device is authenticated.

In step 202-3, a verification result returned by the verification server is received.

The router may receive the verification result returned by the verification server according to related arts.

In step 202-4, if the verification result indicates that the smart device is authenticated, the pre-stored connection information is sent to the smart device via the first connection.

The router sends the pre-stored connection information to the smart device via the first connection only if the verification result returned by the verification server indicates that the smart device is authenticated.

Rather, in embodiments of the present disclosure, in order to further improve user experience, before sending the connection information to the smart device, the router sends a push notification to a terminal in which a router management application program APP is pre-installed. It is up to the user of the terminal to decide whether to send the connection information. Step 202 is implemented as shown in Fig. 6. Fig. 6 shows another method for establishing a connection according to another exemplary embodiment. The method may include:

In step 202-1', a push notification is sent to a terminal, wherein the push notification is configured to confirm whether to send the connection information.

The router sends, according to related arts, a push notification to a terminal in which a router management APP or application is pre-installed. After receiving the push notification, the terminal outputs the push notification according to related arts so that the user of the terminal can decide whether to agree with sending the connection to the smart device by the router according to the push notification.

In step 202-2', if a confirmation message for confirming to send the connection information sent from the terminal is received, the pre-stored connection information is sent to the smart device via the first connection.

If the user of the terminal agrees with sending the connection information to the smart device by the router, the terminal returns a confirmation message for confirming to send the connection information to the router. After receiving the confirmation message, the router automatically sends the pre-stored connection information to the smart device.

In the above embodiment, the router sends the connection information of itself to the smart device in a wired connection manner, and the connection is configured to enable the smart device to be connected to the router in a wireless connection manner. Thus, leakage of the connection of the router is avoided and information security is improved.

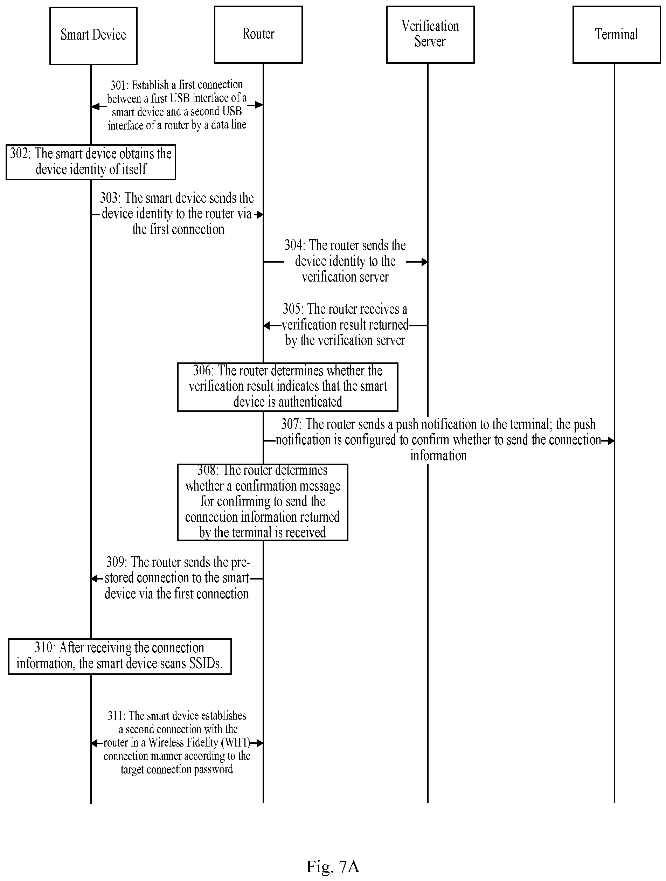

Fig. 7A shows another method for establishing a connection according to an exemplary embodiment. The method includes the following steps.

In step 301, a first connection is established between a first USB interface of a smart device and a second USB interface of a router by a data line.

In step 302, the smart device obtains the device identity of itself.

The smart device may obtain the device identity of itself according to related arts, and the device identity may be the SN, MAC address or IMEI of the smart device.

In step 303, the smart device sends the device identity to the router via the first connection.

In step 304, the router sends the device identity to the verification server.

In the step, the router may forward the device identity to the verification server using related arts, so that the verification server can verify whether the smart device is authenticated.

In step 305, the router receives a verification result returned by the verification server.

In step 306, the router determines whether the verification result indicates that the smart device is authenticated; if the smart device is authenticated, step S307 is performed; if the smart device is unauthenticated, the current procedure for establishing a connection ends.

In step 307, the router sends a push notification to the terminal. The push notification is used to confirm whether to send the connection information.

In the step, the router sends the push notification to a terminal in which a router management APP or application is pre-installed, wherein the push notification is configured to inquire whether the user of the terminal agrees with sending the connection information of the router in a wireless connection manner.

In step 308, the router determines whether a confirmation message for confirming to send the connection information returned by the terminal is received; if the confirmation message is received, step 309 is performed; if the confirmation message is not received, the current procedure for establishing a connection ends.

In step 309, the router sends the pre-stored connection to the smart device via the first connection.

The connection information is configured to enable the smart device to be connected to the router in a wireless connection manner.The connection information may include a target SSID which the router belongs to and a target password which enables a connection to the router.

In step 310, after receiving the connection information, the smart device scans SSIDs.

In the step, the smart device may scan SSIDs using related arts within a range where the smart device currently is. If the smart device finds the target SSID, step 311 is performed.

In step 311, the smart device establishes a second connection with the router in a Wireless Fidelity (WIFI) connection manner according to the target connection password.

The smart device may automatically establish a second connection with the router via a Wireless Fidelity (WIFI) connection manner according to related arts based on the target connection password in the connection information.

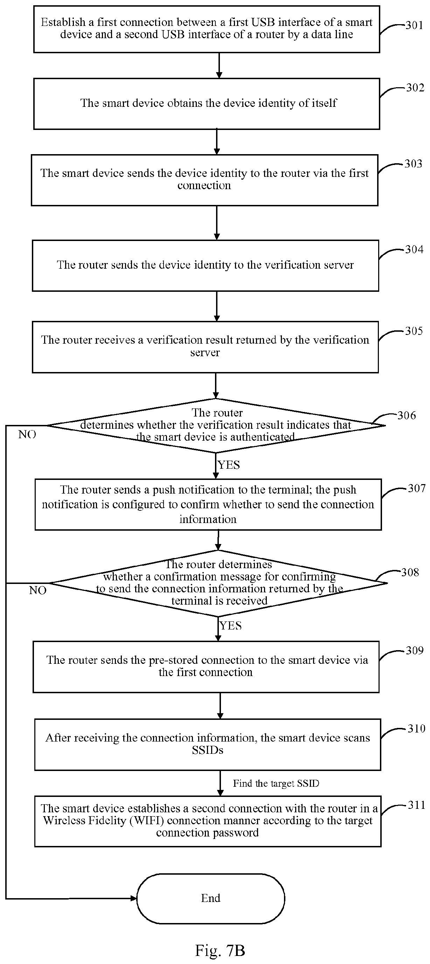

The entire flowchart of the above method is as shown in Fig. 7B.

Alternatively, in the above procedure, the router may first determine whether the confirmation message sent from the terminal is received, and then determine whether the verification result returned by the verification server indicates that the smart device is authenticated.

In the above embodiments, a smart device first establishes a first connection with a router in a wired connection manner, and then obtains connection information via the first connection. Further, the smart device, according to the connection information, establishes a second connection with the router in a wireless connection manner. Because the smart device obtains the connection information of the router in the wired connection manner, leakage of the connection information of the router can be avoided and thereby information security is improved.

Corresponding to the above embodiments of methods for establishing a connection, the present disclosure further provides embodiments of devices for establishing a connection.

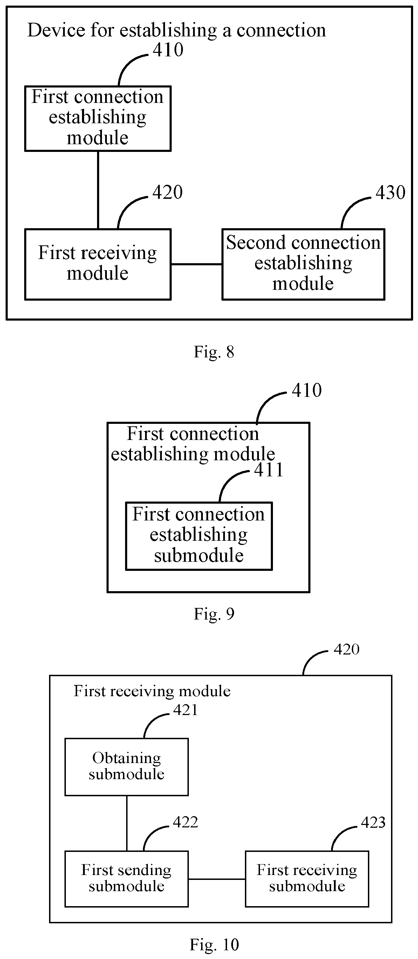

Fig. 8 is a block diagram showing a device for establishing a connection according to an exemplary embodiment of the present disclosure. The device is applied in a smart device and includes a first connection establishing module 410, a first receiving module 420 and a second connection establishing module 430.

The first connection establishing module 410 is configured to establish a first connection with a router in a wired connection manner.

The first receiving module 420 is configured to receive connection information sent from the router via the first connection established by the first connection establishing module, wherein the connection information is configured to enable the smart device to be connected to the router in a wireless connection manner.

The second connection establishing module 430 is configured to, according to the connection information received by the first receiving module 420, establish a second connection with the router in the wireless connection manner.

In the embodiment, a smart device firstly establishes a first connection with a router in a wired connection manner, and then obtains connection information via the first connection, wherein the connection information is configured to enable the smart device to be connected to the router in a wireless connection manner. Further, the smart device, according to the connection information, establishes a second connection with the router in the wireless connection manner. Because the smart device obtains the connection information of the router in the wired connection manner, leakage of the connection information can be avoided and thereby information security is improved.

Fig. 9 is a block diagram showing another device for establishing a connection according to an exemplary embodiment of the present disclosure. On the basis of the embodiment as shown in Fig. 8, the first connection establishing module 410 in this embodiment includes a first connection establishing submodule 411.

The first connection establishing submodule 411 is configured to establish the first connection between a first Universal Serial Bus (USB) interface of the smart device and a second USB interface of the router by a data line.

Fig. 10 is a block diagram showing another device for establishing a connection according to an exemplary embodiment of the present disclosure. On the basis of the embodiment as shown in Fig. 8, the first receiving module 420 in this embodiment includes an obtaining submodule 421, a first sending submodule 422 and a first receiving submodule 423.

The obtaining submodule 421 is configured to obtain a device identity of the smart device.

The first sending submodule 422 is configured to send the device identity obtained by the obtaining submodule 421 to the router via the first connection, so that the router obtains a verification result of whether the smart device is authenticated according to the device identity and sends the connection information via the first connection when the verification result indicates that the smart device is authenticated.

The first receiving submodule 423 is configured to receive the connection information sent from the router via the first connection established by the first connection establishing module 410.

In above embodiment, after establishing the first connection with the router in the wired connection manner, the smart device may send the device identity of itself to the router via the first connection, and the router obtains a verification result of whether the smart device is authenticated. The router sends pre-stored connection information to the smart device only if the verification result indicates that the smart device is authenticated, and thus the information security is further guaranteed.

The connection information received by the first receiving module 420 may include a target Service Set Identifier (SSID) which the router belongs to and a target connection password which enables a connection to the router.

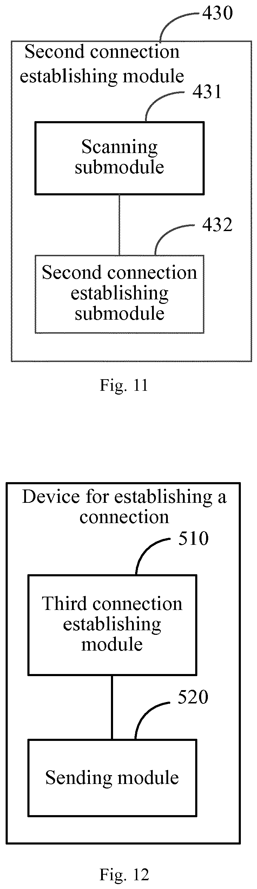

Fig. 11 is a block diagram showing another device for establishing a connection according to an exemplary embodiment of the present disclosure. On the basis of the embodiment as shown in any one of Figs. 8-10, the second connection establishing module 430 in this embodiment includes a scanning submodule 431 and a second connection establishing submodule 432.

The scanning submodule 431 is configured to perform SSID scanning,

The second connection establishing submodule 432 is configured to, if the target SSID received by the first receiving module 420 is found, establish the second connection with the router in a Wireless Fidelity (WIFI) connection manner according to the target connection password received by the first receiving module 420.

In the above embodiment, after receiving the connection information, the smart device may scan SSIDs. If the target SSID in the connection information is found, the smart device may establish a second connection with the router in a Wireless Fidelity (WIFI) connection manner according to the target connection password in the connection information. In the above procedure, in addition to avoidance of leakage of router connection information, the wireless connection between the smart device and the router is successfully established, and user experience is improved.

Fig. 12 is a block diagram showing another device for establishing a connection according to an exemplary embodiment of the present disclosure. The device is applied in a router and includes a third connection establishing module 510 and a sending module 520.

The third connection establishing module 510 is configured to establish a first connection with a smart device in a wired connection manner.

The sending module 520 is configured to send pre-stored connection information to the smart device via the first connection established by the third connection establishing module 510, wherein the connection information is configured to enable the smart device to be connected to the router in a wireless connection manner, so that the smart device establishes a second connection with the router in the wireless connection manner according to the connection information.

In the above embodiment, the router sends the connection information of itself to the smart device in a wired connection manner, and thus leakage of the connection information is avoided and information security is improved.

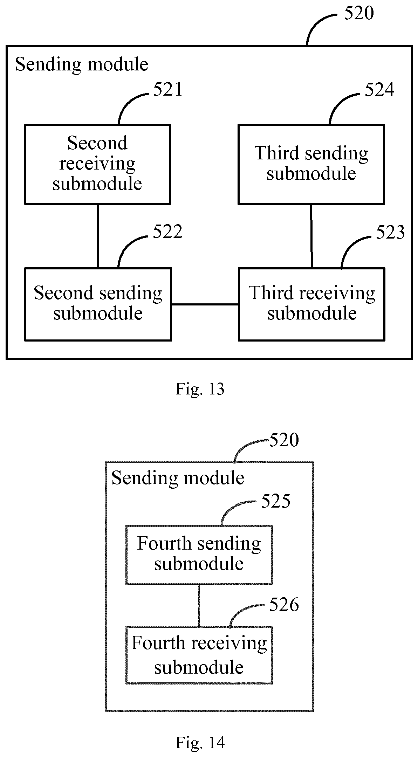

Fig. 13 is a block diagram showing another device for establishing a connection according to an exemplary embodiment of the present disclosure. On the basis of the embodiment as shown in Fig. 12, the sending module 520 in this embodiment includes a second receiving submodule 521, a second sending submodule 522, a third receiving submodule 523 and a third sending submodule 524.

The second receiving submodule 521 is configured to receive a device identity of the smart device sent from the smart device via the first connection established by the third connection establishing module 510.

The second sending submodule 522 is configured to send the device identity received by the second receiving submodule 521 to a verification server, so that the verification server verifies whether the smart device is authenticated according to the device identity.

The third receiving submodule 523 is configured to receive a verification result returned by the verification server.

The third sending submodule 524 is configured to, if the verification result received by the third receiving submodule 523 indicates that the smart device is authenticated, send the pre-stored connection information to the smart device via the first connection established by the third connection establishing module.

In the above embodiment, the router forwards the received device identity of the smart device to a verification server. If the verification result returned by the verification server indicates that the smart device is authenticated, the router sends the pre-stored connection information to the smart device. Thus, information security is further improved.

Fig. 14 is a block diagram showing another device for establishing a connection according to an exemplary embodiment of the present disclosure. On the basis of the embodiment as shown in Fig. 12, the sending module 520 in this embodiment includes a fourth sending submodule 525 and a fourth receiving submodule 526.

The fourth sending submodule 525 is configured to send a push notification to a terminal, wherein the push notification is configured to confirm whether to send the connection information.

The fourth receiving submodule 526 is configured to, if a confirmation message for confirming to send the connection information sent from the terminal is received, send the pre-stored connection information to the smart device via the first connection.

In the above embodiment, before sending the connection information to the smart device, the router may firstly send a push notification to a terminal in which a router management application program APP is pre-installed to make a user of the terminal decide whether to send the connection information, and thus user experience is improved.

Correspondingly, the present disclosure provides a device for establishing a connection, applied in a smart device and including:
a processor; and
a memory for storing instructions executable by the processor;
wherein the processor is configured to:
establish a first connection with a router in a wired connection manner;
receive connection information sent from the router via the first connection, wherein the connection information is configured to enable the smart device to be connected to the router in a wireless connection manner; and
according to the connection information, establish a second connection with the router in the wireless connection manner.

Correspondingly, the present disclosure provides a device for establishing a connection, applied in a router and including:
a processor; and
a memory for storing instructions executable by the processor;
wherein the processor is configured to:
establish a first connection with a smart device in a wired connection manner; and
send pre-stored connection information to the smart device via the first connection, wherein the connection information is configured to enable the smart device to be connected to the router in a wireless connection manner, so that the smart device establishes a second connection with the router in the wireless connection manner according to the connection information.

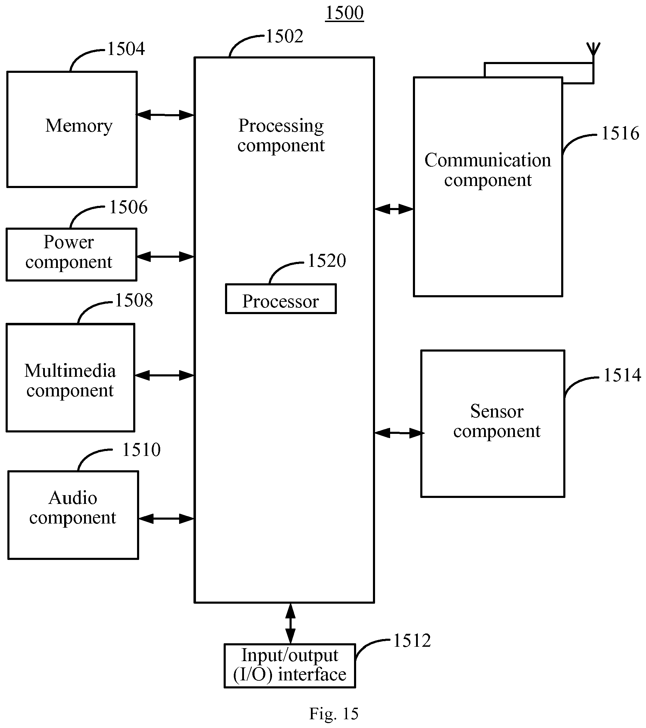

Fig. 15 is a block diagram showing a structure of a device 1500 for establishing a connection according to an exemplary embodiment of the present disclosure. For example, the device 1500 may be smart devices provided with USB interfaces, such as a mobile phone, a computer, a digital broadcast terminal, a messaging device, a smart socket, a smart sphygmomanometer, a gaming console, a tablet, a medical device, exercise equipment, a personal digital assistant, a smart wrisband, a smart watch, and the like.

Referring to Fig. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1508 includes a front camera and/or a rear camera. The front camera and the rear camera may receive an external multimedia datum while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone ("MIC") configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, a microwave sensor, or a temperature sensor.

The communication component 1516 is configured to facilitate communication, wired or wirelessly, between the device 1500 and other devices. The device 1500 can access a wireless network based on a communication standard, such as WiFi, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1504, executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

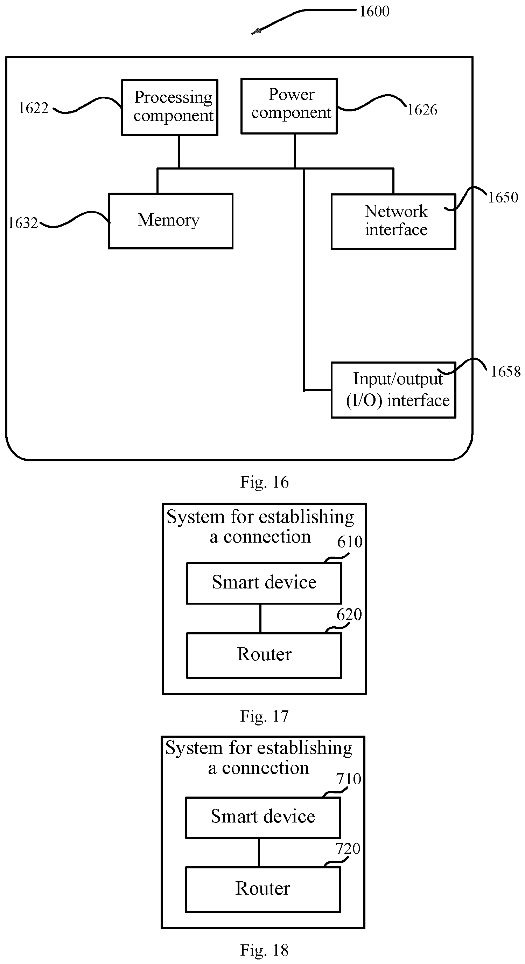

Fig. 16 is a block diagram showing another device 1600 for establishing a connection according to an exemplary embodiment of the present disclosure. For example, the device 1600 may be provided as a router with a USB interface. Referring to Fig. 16, the device 1600 includes a processing component 1622 that further includes one or more processors, and memory resources represented by a memory 1632 for storing instructions executable by the processing component 1622, such as application programs. The application programs stored in the memory 1632 may include one or more modules each corresponding to a set of instructions. Further, the processing component 1622 is configured to execute the instructions to perform the above described method for establishing a connection.

The device 1600 may also include a power component 1626 configured to perform power management of the device 1600, wired or wireless network interface(s) 1650 configured to connect the device 1600 to a network, and an input/output (I/O) interface 1658. The device 1600 may operate based on an operating system stored in the memory 1632, such as Windows Server™, Mac OS X™, Unix™, Linux™, FreeBSD™, or the like.

Fig. 17 is a block diagram showing a system for establishing a connection according to an exemplary embodiment of the present disclosure. The system may include a smart device 610 (i.e., the device for establishing a connection as shown in Figs. 8-11) and a router 620 (i.e., the device for establishing a connection as shown in Figs. 12-14).

Fig. 18 is a block diagram showing another system for establishing a connection according to an exemplary embodiment of the present disclosure. The system includes a terminal 710 (for example, as shown in Fig. 15) and a router 720 (for example, as shown in Fig. 16).

It will be appreciated that the present invention is not limited to the exact construction that has been described above and illustrated in the accompanying drawings, and that various modifications and changes can be made without departing from the scope thereof. It is intended that the scope of the present invention only be limited by the appended claims.

## Claims

1. A method for establishing a connection, the method comprising:
a router establishing (201) a first connection with a smart device in a wired connection manner; and
the router sending (202) pre-stored connection information to the smart device via the first connection, wherein the connection information is configured to enable the smart device to be connected to the router in a wireless connection manner, so that the smart device establishes a second connection with the router in the wireless connection manner according to the connection information,
wherein the router sending (202) the pre-stored connection information to the smart device via the first connection, comprises:
the router sending (202-1') a push notification to a terminal, wherein the push notification is used by the user of the terminal to confirm whether to send the pre-stored connection information from the router to the smart device; and
if the router receives from the terminal a confirmation message confirming to send said pre-stored connection information to the smart device, the router sends (202-2') the pre-stored connection information to the smart device via the first connection.

2. The method according to claim 1, wherein the router sending (202) pre-stored connection information to the smart device via the first connection, comprises:
the router receiving (202-1) a device identity of the smart device sent from the smart device via the first connection;
the router sending (202-2) the device identity to a verification server, so that the verification server verifies whether the smart device is authenticated according to the device identity;
the router receiving (202-3) a verification result returned by the verification server; and
if the verification result indicates that the smart device is authenticated, the router sending (202-4) the pre-stored connection information to the smart device via the first connection.

3. A system for establishing a connection, comprising:
a connection establishing module (510), in a router, configured to establish a first connection with a smart device in a wired connection manner; and
a sending module (520), in said router, configured to send pre-stored connection information to the smart device via the first connection established by the connection establishing module in said router, wherein the connection information is configured to enable the smart device to be connected to said router in a wireless connection manner, so that the smart device establishes a second connection with said router in the wireless connection manner according to the pre-stored connection information,
wherein the sending module (520) in said router comprises:
a receiving submodule (521) configured to receive a device identity of the smart device sent from the smart device via the first connection established by the connection establishing module (510);
a second sending submodule (522) configured to send the device identity received by the receiving submodule to a verification server, so that the verification server verifies whether the smart device is authenticated according to the device identity;
another receiving submodule (523) configured to receive a verification result returned by the verification server; an additional sending submodule (525) configured to send a push notification to a terminal, wherein the push notification is used, by the user of the terminal, to confirm whether to send said pre-stored connection information from the router to the smart device via the first connection; a further receiving submodule (526) configured to receive a confirmation message from the terminal to confirm to the router to send said pre-stored connection information to the smart device via the first connection, and
a third sending submodule (524) configured to, if the verification result received by the another receiving submodule indicates that the smart device is authenticated, send the pre-stored connection information to the smart device via the connection established by the connection establishing module;

4. The system of claim 3, wherein the terminal is configured to return to the router said confirmation message confirming the router to send said pre-stored connection information to the smart device via the first connection.

5. A system according to claim 4, wherein the smart device further comprises a receiving module, configured to receive said pre-stored connection information sent from the router via the first connection.

6. The system of claim 5, wherein establishing the first connection between the router and the smart device in the wired connection manner comprises:
establishing the first connection between a first Universal Serial Bus, USB, interface of the smart device and a second USB interface of the router by data line.

7. The system of claim 5 or 6, wherein said pre-stored connection information comprises a target Service Set Identifier, SSID, which the router belongs to and a target connection password which enables a connection to the router.

8. A method for establishing a connection applied in the system of any of claims 4 to 7 comprising the method of claim 1, wherein the terminal receives a push notification from the router and sends a confirmation whether to send the connection information.

## Patentansprüche

1. Verfahren zum Aufbauen einer Verbindung, wobei das Verfahren Folgendes aufweist:
Aufbauen (201) einer ersten Verbindung mit einem Smart-Gerät auf drahtgebundene Verbindungsweise durch einen Router; und
Senden (202) vorgespeicherter Verbindungsinformationen durch den Router über die erste Verbindung an das Smart-Gerät, wobei die Verbindungsinformationen konfiguriert sind zum Ermöglichen, dass das Smart-Gerät auf drahtlose Verbindungsweise mit dem Router verbunden wird, so dass das Smart-Gerät eine zweite Verbindung mit dem Router auf die drahtlose Verbindungsweise gemäß den Verbindungsinformationen aufbaut,
wobei das Senden (202) vorgespeicherter Verbindungsinformationen durch den Router über die erste Verbindung an das Smart-Gerät Folgendes aufweist:
Senden (202-1') einer Push-Benachrichtigung an ein Endgerät durch den Router, wobei die Push-Benachrichtigung von dem Benutzer des Endgeräts zum Bestätigen verwendet wird, ob die vorgespeicherten Verbindungsinformationen vom Router an das Smart-Gerät gesendet werden sollen, und,
falls der Router vom Endgerät eine Bestätigungsnachricht empfängt, die bestätigt, dass die genannten vorgespeicherten Verbindungsinformationen an das Smart-Gerät zu senden sind, der Router die vorgespeicherten Verbindungsinformationen über die erste Verbindung an das Smart-Gerät sendet (202-2').

2. Verfahren nach Anspruch 1, wobei das Senden (202) vorgespeicherter Verbindungsinformationen durch den Router über die erste Verbindung an das Smart-Gerät Folgendes aufweist:
Empfangen (202-1) einer von dem Smart-Gerät über die erste Verbindung gesendeten Gerätekennung des Smart-Geräts durch den Router;
Senden (202-2) der Gerätekennung durch den Router an einen Überprüfungsserver, so dass der Überprüfungsserver überprüft, ob das Smart-Gerät gemäß der Gerätekennung authentifiziert ist;
Empfangen (202-3) eines vom Überprüfungsserver zurückgesendetes Überprüfungsergebnisses durch den Router und,
falls das Überprüfungsergebnis erkennen lässt, dass das Smart-Gerät authentifiziert ist, Senden (202-4) der vorgespeicherten Verbindungsinformationen durch den Router über die erste Verbindung an das Smart-Gerät.

3. System zum Aufbauen einer Verbindung, das Folgendes aufweist:
ein Verbindungsaufbaumodul (510) in einem Router, das konfiguriert ist zum Aufbauen einer ersten Verbindung mit einem Smart-Gerät auf drahtgebundene Verbindungsweise; und
ein Sendemodul (520) in dem genannten Router, das konfiguriert ist zum Senden vorgespeicherter Verbindungsinformationen über die erste Verbindung, die von dem Verbindungsaufbaumodul in dem genannten Router aufgebaut wurde, an das Smart-Gerät,
wobei die Verbindungsinformationen konfiguriert sind zum Ermöglichen, dass das Smart-Gerät auf drahtlose Verbindungsweise mit dem genannten Router verbunden wird, so dass das Smart-Gerät eine zweite Verbindung mit dem genannten Router auf die drahtlose Verbindungsweise gemäß den vorgespeicherten Verbindungsinformationen aufbaut,
wobei das Sendemodul (520) in dem genannten Router Folgendes aufweist:
ein Empfangsuntermodul (521), das konfiguriert ist zum Empfangen einer von dem Smart-Gerät über die erste Verbindung, die durch das Verbindungsaufbaumodul (510) aufgebaut wurde, gesendeten Gerätekennung des Smart-Geräts;
ein zweites Sendeuntermodul (522), das konfiguriert ist zum Senden der durch das Empfangsuntermodul empfangenen Gerätekennung an einen Überprüfungsserver, so dass der Überprüfungsserver überprüft, ob das Smart-Gerät gemäß der Gerätekennung authentifiziert ist;
ein weiteres Empfangsuntermodul (523), das konfiguriert ist zum Empfangen eines vom Überprüfungsserver zurückgesendeten Überprüfungsergebnisses;
ein zusätzliches Sendeuntermodul (525), das konfiguriert ist zum Senden einer Push-Benachrichtigung an ein Endgerät, wobei die Push-Benachrichtigung von dem Benutzer des Endgeräts zum Bestätigen verwendet wird, ob die genannten vorgespeicherten Verbindungsinformationen vom Router über die erste Verbindung an das Smart-Gerät gesendet werden sollen;
ein weiteres Empfangsuntermodul (526), das konfiguriert ist zum Empfangen einer Bestätigungsnachricht vom Endgerät, um dem Router zu bestätigen, dass die genannten vorgespeicherten Verbindungsinformationen über die erste Verbindung an das Smart-Gerät zu senden sind, und
ein drittes Sendeuntermodul (524), das konfiguriert ist zum, falls das durch das weitere Empfangsuntermodul empfangene Überprüfungsergebnis erkennen lässt, dass das Smart-Gerät authentifiziert ist, Senden der vorgespeicherten Verbindungsinformationen über die Verbindung, die durch das Verbindungsaufbaumodul aufgebaut wurde, an das Smart-Gerät.

4. System nach Anspruch 3, wobei das Endgerät konfiguriert ist zum Zurücksenden der genannten Bestätigungsnachricht an den Router, die bestätigt, dass der Router die genannten vorgespeicherten Verbindungsinformationen über die erste Verbindung an das Smart-Gerät senden soll.

5. System nach Anspruch 4, wobei das Smart-Gerät ferner ein Empfangsmodul aufweist, das konfiguriert ist zum Empfangen der genannten vorgespeicherten Verbindungsinformationen, die vom Router über die erste Verbindung gesendet werden.

6. System nach Anspruch 5, wobei das Aufbauen der ersten Verbindung auf drahtgebundene Verbindungsweise zwischen dem Router und dem Smart-Gerät Folgendes aufweist:
Aufbauen der ersten Verbindung zwischen einer Universal Serial Bus- (USB) -Schnittstelle des Smart-Geräts und einer zweiten USB-Schnittstelle des Routers durch Datenleitung.

7. System nach Anspruch 5 oder 6, wobei die genannten vorgespeicherten Verbindungsinformationen einen Ziel-Service Set Identifier (SSID) aufweisen, zu dem der Router gehört, und ein Zielverbindungskennwort, das eine Verbindung mit dem Router ermöglicht.

8. Verfahren zum Aufbauen einer Verbindung, das in dem System nach einem der Ansprüche 4 bis 7, die das Verfahren nach Anspruch 1 umfassen, angewendet wird, wobei das Endgerät eine Push-Benachrichtigung vom Router empfängt und eine Bestätigung sendet, ob die Verbindungsinformationen zu senden sind.

## Revendications

1. Procédé d'établissement d'une connexion, le procédé comprenant :
l'établissement (201) par un routeur d'une première connexion avec un dispositif intelligent dans un mode de connexion filaire ; et
l'envoi (202) par le routeur d'informations de connexion prémémorisées au dispositif intelligent par l'intermédiaire de la première connexion, dans lequel les informations de connexion sont configurées pour permettre la connexion du dispositif intelligent au routeur dans un mode de connexion sans fil, de telle sorte que le dispositif intelligent établisse une seconde connexion avec le routeur dans le mode de connexion sans fil conformément aux informations de connexion,
dans lequel l'envoi (202) par le routeur des informations de connexion prémémorisées au dispositif intelligent par l'intermédiaire de la première connexion comprend :
l'envoi (202-1') par le routeur d'une notification poussée à un terminal, dans lequel la notification poussée est utilisée par l'utilisateur du terminal pour confirmer qu'il convient ou non d'envoyer les informations de connexion prémémorisées du routeur au dispositif intelligent ; et
si le routeur reçoit du terminal un message de confirmation qui confirme l'envoi desdites informations de connexion prémémorisées au dispositif intelligent, l'envoi (202-2') par le routeur des informations de connexion prémémorisées au dispositif intelligent par l'intermédiaire de la première connexion.

2. Procédé selon la revendication 1, dans lequel l'envoi (202) par le routeur d'informations de connexion prémémorisées au dispositif intelligent par l'intermédiaire de la première connexion comprend :
la réception (202-1) par le routeur d'une identité de dispositif du dispositif intelligent envoyée par le dispositif intelligent par l'intermédiaire de la première connexion ;
l'envoi (202-2) par le routeur de l'identité de dispositif à un serveur de vérification, de telle sorte que le serveur de vérification vérifie que le dispositif intelligent est authentifié ou non conformément à l'identité du dispositif ;
la réception (202-3) par le routeur d'un résultat de vérification renvoyé par le serveur de vérification ; et
si le résultat de lubrification indique que le dispositif intelligent est authentifié, l'envoi (202-4) par le routeur des informations de connexion prémémorisées au dispositif intelligent par l'intermédiaire de la première connexion.

3. Système d'établissement d'une connexion, comprenant :
un module d'établissement de connexion (510), dans un routeur, configuré pour établir une première connexion avec un dispositif intelligent dans un mode de connexion filaire ; et
un module d'envoi (520), dans ledit routeur, configuré pour envoyer des informations de connexion prémémorisées au dispositif intelligent par l'intermédiaire de la première connexion établie par le module d'établissement de connexion dans ledit routeur,
dans lequel les informations de connexion sont configurées pour permettre la connexion du dispositif intelligent audit routeur dans un mode de connexion sans fil, de telle sorte que le dispositif intelligent établisse une seconde connexion avec ledit routeur dans le mode de connexion sans fil conformément aux informations de connexion prémémorisées,
dans lequel le module d'envoi (520) dans ledit routeur comprend :
un sous-module de réception (521) configuré pour recevoir une identité de dispositif du dispositif intelligent envoyée par le dispositif intelligent par l'intermédiaire de la première connexion établie par le module d'établissement de connexion (510) ;
un second sous-module d'envoi (522) configuré pour envoyer l'identité de dispositif reçue par le sous-module de réception à un serveur de vérification, de telle sorte que le serveur de vérification vérifie que le dispositif intelligent est authentifié ou non conformément à l'identité du dispositif ;
un autre sous-module de réception (523) configuré pour recevoir un résultat de vérification renvoyé par le serveur de vérification ;
un sous-module d'envoi supplémentaire (525) configuré pour envoyer une notification poussée à un terminal, dans lequel la notification poussée est utilisée par l'utilisateur du terminal pour confirmer qu'il convient ou non d'envoyer lesdites informations de connexion prémémorisées par le routeur au dispositif intelligent par l'intermédiaire de la première connexion ;
un autre sous-module de réception supplémentaire (526) configuré pour recevoir un message de confirmation depuis le terminal pour confirmer au routeur d'envoyer lesdites informations de connexion prémémorisées au dispositif intelligent par l'intermédiaire de la première connexion ; et
un troisième sous-module d'envoi (524) configuré pour, si le résultat de vérification reçu par l'autre sous-module de réception indique que le dispositif intelligent est authentifié, envoyer les informations de connexion prémémorisées au dispositif intelligent par l'intermédiaire de la première connexion établie par le module d'établissement de connexion.

4. Système selon la revendication 3, dans lequel le terminal est configuré pour renvoyer au routeur ledit message de confirmation confirmant au routeur d'envoyer lesdites informations de connexion prémémorisées au dispositif intelligent par l'intermédiaire de la première connexion.

5. Système selon la revendication 4, dans lequel le dispositif intelligent comprend en outre un module de réception, configuré pour recevoir lesdites informations de connexion prémémorisées envoyées par le routeur par l'intermédiaire de la première connexion.

6. Système selon la revendication 5, dans lequel l'établissement de la première connexion entre le routeur et le dispositif intelligent dans le mode de connexion filaire comprend :
l'établissement de la première connexion entre une première interface de bus série universel, USB, du dispositif intelligent et une seconde interface USB du routeur par ligne de données.

7. Système selon la revendication 5 ou 6, dans lequel lesdites informations de connexion prémémorisées comprennent un identifiant d'ensemble de services, SSID, cible auquel appartient le routeur et un mot de passe de connexion cible qui permet une connexion avec le routeur.

8. Procédé d'établissement d'une connexion appliquée dans le système selon l'une quelconque des revendications 4 à 7 comprenant le procédé selon la revendication 1, dans lequel le terminal reçoit une notification poussée depuis le routeur et envoie une confirmation qu'il convient ou non d'envoyer les informations de connexion.
